# EUROPEAN PATENT APPLICATION

(11) **EP 3 537 435 A1**
(43) Date of publication of application: **11.09.2019**
(21) Application number: 18161119.5
(22) Date of filing: 09.03.2018
(51) Int. Cl.: G10L 17/22, G10L 25/51, G06F 21/32

(54) **METHOD OF VERIFYING THE AUTHENTICITY OF A VOICE SAMPLE**

(71) Applicant: VoicePIN.com Sp. z o.o., 30-535 Kraków (PL)
(72) Inventor: KALICKI, Daniel, 30-535 Kraków (PL); DANKIEWICZ, Michal, 30-535 Kraków (PL); CIURKA, Pawel, 30-535 Kraków (PL); GALKA, Jakub, 30-535 Kraków (PL)
(74) Representative: Markieta, Jaroslaw Franciszek

(57) **Abstract**

The subject of the invention is a user voice verification method, in which in the presence of the user an acoustic marker signal is played, a voice signal from the user marked by an acoustic marker signal is recorded, characterised in that an acoustic marker signal is separated from the registered signal, a check is performed whether the registered signal features the acoustic marker signal expected for a given session, and then the acoustic marker signal is verified, by checking whether the recorded signal features an acoustic marker signal unexpected for a given session or whether there is a trace of acoustic marker signal being removed from or modified in the registered signal, as well as the fact that an alarm signal is generated, if there is no acoustic marker signal in the signal for the particular session or the acoustic merker signal verification result is positive.

## Description

The subject of the invention is a method of verifying the authenticity of a voice sample.

The invention relates to the field of user personal verification and makes it possible to confirm the authenticity of a voice sample.

The priority feature of all user verification systems is to provide security related to reducing the risk of a successful verification by an unauthorised person. In the case of voice verification systems, one of the most common methods of attack is for an unauthorised person to record the voice of the target person and then reproduce the resulting recording during a voice verification attempt.

In the publication "An Overview and Analysis of Voice Authentication Methods" by A. Shoup, T. Talkar, J. Chen and A. Jain, a solution to this problem was disclosed consisting in introducing noise into the recorded signal, defined individually for each verification session. As a result, a report of such a recorded signal obtained illegitimately is received as an attack attempt using a recording containing noise inappropriate for the given verification session.

From document US9368124B2 a system is known for acoustic marking of the recorded audio signal, allowing to confirm the authenticity of the recording and thus preventing attack attempts using an illegitimately obtained recording by an unauthorised person. According to the solution disclosed in the US patent, an acoustic signature introduced into the recorded signal is defined individually for each verification session based on unique, random binary bits.

Solutions known in prior art limit the risk of an unauthorised person attempting to conduct positive verification using an illegitimate recording, by introducing into the recorded signal an individual acoustic marker for each verification session. However, they do not allow detection of attempts to manipulate the recorded signal by introducing an additional acoustic signal marker or removing/modifying the acoustic marker signal.

The essence of the invention is a method of verifying the authenticity of a voice sample, in which in the presence of the user an acoustic marker signal is played, a voice signal from the user marked by an acoustic marker signal is recorded, characterised in that an acoustic marker signal is separated from the registered signal, a check is performed whether the registered signal features the acoustic marker signal expected for a given session, and then the acoustic marker signal is verified, by checking whether the recorded signal features an acoustic marker signal unexpected for a given session or whether there is a trace of the acoustic marker signal being removed from or modified in the registered signal. The method according to the invention is further characterised in that an alarm signal is generated, if in the signal there is no acoustic marker signal for a particular session or the result of the acoustic marker signal's verification is positive.

Preferably, according to the invention the method is characterised in that the acoustic marker signal of a particular session is a unique combination of tonal frequencies assigned based on parameters identifying a given session.

Preferably, according to the invention the method is characterised in that the verification of the presence of an expected and unexpected acoustic marker signal for a given session is based on band energy measurement.

Preferably, according to the invention the method is characterised in that the presence of an expected acoustic marker signal is confirmed, if for each frequency from the set of frequencies expected in the signal in a particular session, the quotient of the energy measured for the verified frequency and the average energy measured for two neighbouring frequencies is greater than the threshold of the expected acoustic marker signal.

Preferably, according to the invention the method is characterised in that the verification of the presence of an expected and unexpected acoustic marker signal for a given session is based on the use of a spectrogram and standard deviation in individual frequency bands.

Preferably, according to the invention the method is characterised in that the presence of an acoustic marker signal expected in a particular session is confirmed, if for each frequency from the set of frequencies expected in the signal, the standard deviation of the spectrogram line containing the frequency subject to verification is greater than the threshold of the expected acoustic marker signal.

Preferably, according to the invention the method is characterised in that the presence of an unexpected acoustic marker signal is confirmed, if the detected number of frequencies from the set of frequencies that are not expected in the signal exceeds the threshold for the unexpected acoustic marker signal.

Preferably, according to the invention the method is characterised in that the verification of the presence of a trace of removal or modification of the acoustic marker signal for a given session is based on band energy measurement.

Preferably, according to the invention the method is characterised in that the presence of a trace of removal or modification of an acoustic marker signal is confirmed, if for a set of frequencies that are not expected in the signal, the number of detected components of the acoustic marker signal is greater than the threshold of the trace of removal or modification of the acoustic marker signal.

The advantage of the solution according to the invention is a reduction in the risk of an unauthorised person performing a successful verification by means of a voice sample obtained illegitimately, by detecting the presence of an unexpected acoustic marker signal in the recorded signal, as well as a trace of removal or modification of the acoustic marker signal. The subject of the invention is presented in more detail in a preferred embodiment in figures, in which:
- Fig. 1: presents a general diagram of the method used for verifying the authenticity of a voice sample according to the invention,
- Fig. 2: presents a diagram of the summation of a speech signal from a user with an acoustic marker signal,
- Fig.3: presents a diagram of the method of verification of the presence of the expected acoustic marker signal using band energy,
- Fig.4: presents a diagram of the method of verification of the presence of the expected acoustic marker signal using standard deviation,
- Fig.5: presents a diagram of the method of verification of the presence of an unexpected acoustic marker signal,
- Fig.6: presents a diagram of a method for detecting the identification of a trace of removal or modification of an acoustic marker signal.

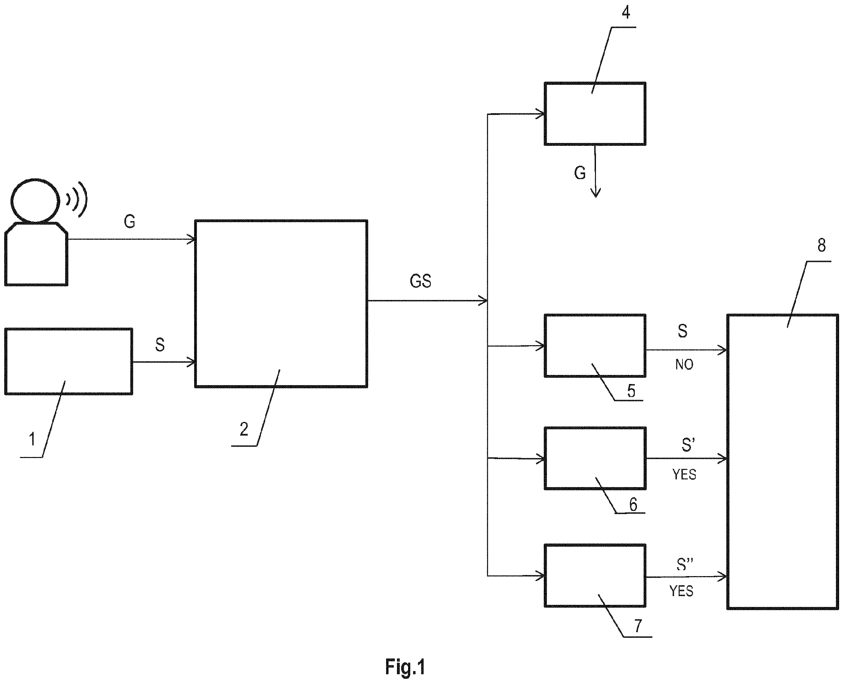

Fig. 1 presents a general diagram of a method used for verifying the authenticity of a voice sample according to the invention. According to the invention, in the presence of a user, one acoustic marker signal S is reproduced. Then, a voice signal G from the user is registered 2 marked with the acoustic marker signal S. The voice signal G originating from the user may, according to the invention, be both a fixed, strictly defined password or any phrase spoken by the user. The acoustic marker signal S identifying a particular session is, meanwhile, a set of specific tonal frequencies. In the next step of the method according to the invention, the registered summarised acoustic signal GS is sent to the server layer, with the acoustic marker signal S being extracted from the registered signal GS, preferably by bandpass filters. The extraction of the acoustic marker signal S increases the correctness of user verification, from the point of view of which it constitutes only an undesirable disturbance. In the next step, according to the invention, it is verified 5 whether the recorded signal GS features the expected acoustic marker signal S for the particular session, based on the knowledge of its expected tonal frequencies. Then, the registered acoustic signal GS is verified by checking 6, whether the registered signal features an acoustic marker signal unexpected for a particular session S' and verification is conducted 7, if the registered signal features trace S" indicating removal or modification of the acoustic marker signal. In the case of detection of the acoustic marker signal S expected for a particular session and non-detection of either an unexpected acoustic marker signal S' or trace S" of removal or modification of the acoustic marker signal, it is assumed that the result of the verification is positive. According to the invention, in the absence of detection of the acoustic marker signal S expected for a particular session, the detection of an unexpected acoustic marker signal S' or detection of trace S" of removal or modification of the acoustic marker signal, alarm signal 8 is generated.

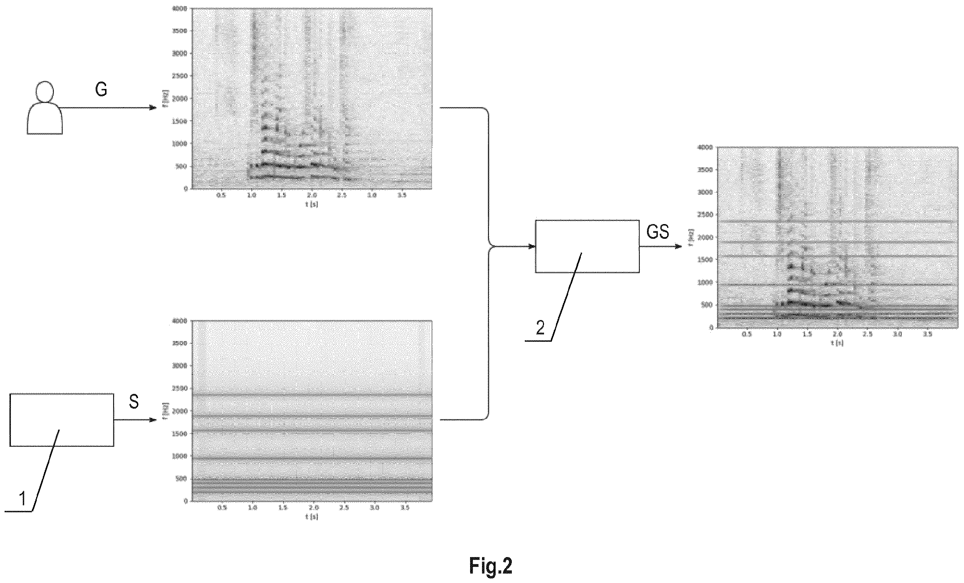

Fig. 2 presents the effect of the summation of a speech signal from a user with an acoustic marker signal using spectrograms. According to the invention, the acoustic marker signal S of a particular session is a unique tonal combination, assigned on the basis of the parameters identifying the given session. The choice of tonal frequencies that will constitute the acoustic marker signal S of a particular session, is based on the code book K, which assigns a unique combination of frequencies to N-bit words resulting from session parameters. Preferably, the session identification parameters according to the invention are as follows: transaction number, transaction time, transaction location, device ID, user's voice model ID. As shown in Fig. 2, the voice signal G originating from the user and marked with acoustic marker signal S, which is registered 3 during the verification of authenticity of the voice sample presented in Fig. 1, is the sum of tonal signals GS of different frequencies.

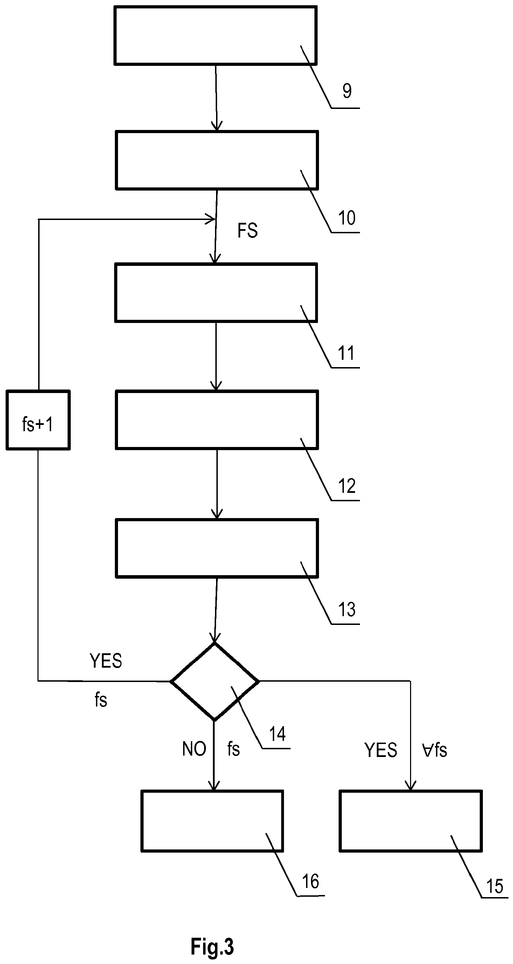

Fig. 3 presents an embodiment of the invention, in which the presence of an expected acoustic marker signal S is verified using band energy. In accordance with this embodiment of the invention, the expected information regarding the parameters identifying a particular session in the form of a bit sequence is obtained 9 for each session. Then, thanks to code book K, the set of expected tonal frequencies FS corresponding to the particular bit sequence is read 10 and, for the verified tonal frequency fs from the set FS, the signal energy is measured 11 for frequency fs and the average energy of two neighbouring frequencies is measured 12, preferably 10 Hz higher and 10 Hz lower than frequency fs. In accordance with this embodiment of the invention, subsequently the energy quotient of the verified frequency fs and the average energy of the two neighbouring frequencies are calculated 13. The obtained value is compared 14 with the assumed threshold value of the expected acoustic marker signal. As shown in Fig. 3, it is assumed that the presence of the acoustic marker signal S expected for a particular session is confirmed 15, if for each of the verified frequencies ∀fs, the value of the quotient is greater than the assigned threshold value of the expected acoustic marker signal. If the presence of any of the verified frequencies fs from the set FS is not confirmed, according to this embodiment of the invention it is assumed that the presence of the expected acoustic marker signal S is not confirmed 16. In the case one frequency fs from the set FS is detected, the process of energy measurement and calculation of the quotient for the next frequency fs+1 from the set FS is repeated.

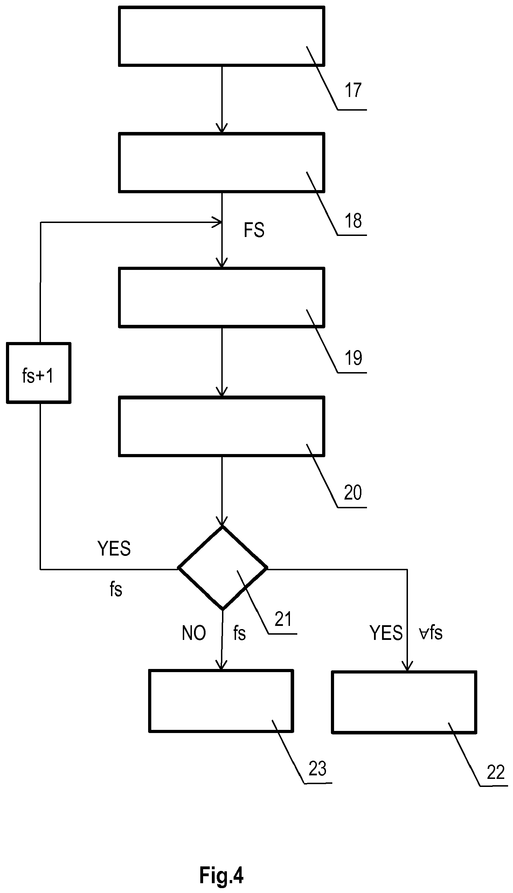

Fig. 4 presents, in the form of a diagram, another embodiment of the invention, in which verification of the presence of the expected acoustic marker signal S is performed using the standard deviation in the bands. In accordance with this embodiment of the invention, the expected information regarding the parameters identifying a particular session, in the form of a bit sequence, is obtained 17 for each session. Then, thanks to the code book K, the set FS of expected tonal frequencies corresponding to the given bit sequence is read 18. Subsequently, after obtaining information about the expected tonal frequencies fs from the set FS, a spectrogram of the voice signal G from the user is designated 19, marked with an acoustic marker signal S. In this embodiment of the invention, a standard deviation of the spectrogram line containing the currently verified tonal frequency fs from the FS set is determined 20. The obtained value is compared 21 with the assumed threshold value of the expected acoustic marker signal. As shown in Fig. 4, it is assumed that if for each of the verified tonal frequencies ∀fs from the set FS, the standard deviation of the spectrogram line is smaller than the assumed threshold of the expected acoustic marker signal, the presence of the expected acoustic marker signal S is confirmed 22. If the presence of any of the expected tonal frequencies fs from the set FS is not confirmed, it is assumed that the presence of the expected acoustic marker signal S is not confirmed 23. In the case one frequency fs from the set FS is detected, the process of energy measurement and calculation of the quotient for the next frequency fs+1 from the set FS is repeated.

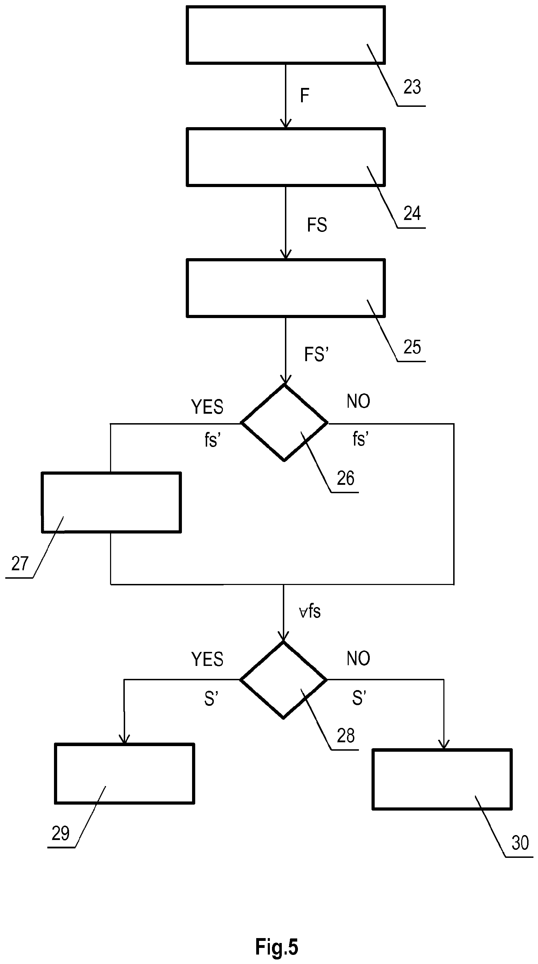

Fig. 5 presents a diagram of the verification of the presence of the unexpected acoustic marker signal S'. According to the invention, for each session a set of all possible tonal frequencies F is acquired 23 and a set of expected tonal frequencies of the acoustic marker signal FS is obtained 24. Subsequently, according to the invention, the entire frequency range of the acoustic marker signal FS is subtracted 25 from the set of all possible tonal frequencies F, and only those frequencies that are not expected in the session signal, i.e. the frequency set FS', are verified. According to this embodiment, detecting 26 a single component frequency fs' of an unexpected acoustic marker signal from the set FS', takes place using the above-described methods based on the use of band energy or a spectrogram and standard deviation. In the case of detection of a single component frequency fs' of an unexpected acoustic marker signal of the set FS', the event counter increases 27. This process is repeated for all frequencies fs' from set FS' that are not expected in the signal of a particular session. As shown in Fig. 5, subsequently the total number of detected unexpected tonal frequencies Vfs' is compared 28 with the threshold of the unexpected acoustic marker signal. It is assumed that if the number of individual unexpected tonal frequencies fs' detected is greater than the assumed threshold for an unexpected acoustic marker signal, the presence of the unexpected acoustic marker signal S' is confirmed 29. In the event the number of individual unexpected tonal frequencies fs' detected is less than the assumed threshold for an unexpected acoustic marker signal, the presence of an unexpected acoustic marker signal S' is not confirmed 29.

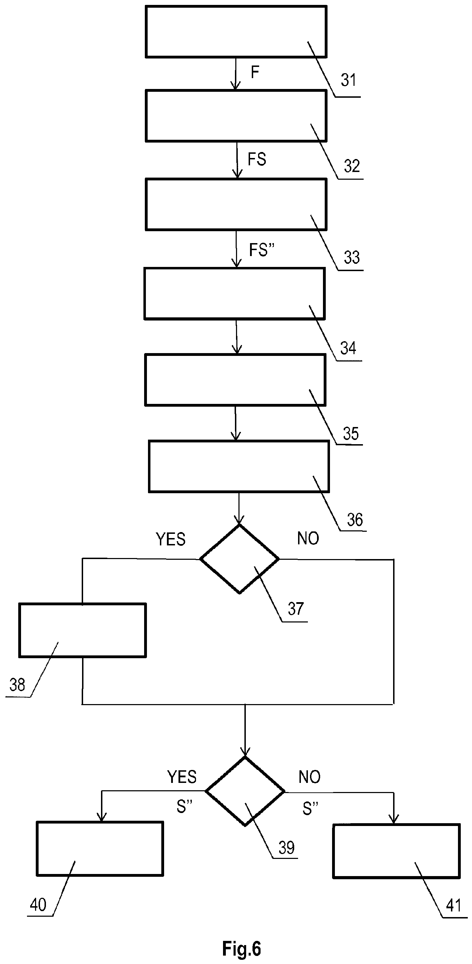

Fig. 6 presents a diagram of a method for detecting the trace S" of removal or modification of an acoustic marker signal. In this embodiment of the invention, a set of all possible tonal frequencies F is acquired 31 and a collection of tone frequencies of the acoustic signal FS is acquired 32. Subsequently, the entire frequency range of the acoustic marker signal FS is subtracted 33 from the set of all possible tonal frequencies F, and only those frequencies that are not expected in the session signal FS" are verified. For each of the frequencies fs" from the set FS" the energy of the signal with the frequency fs" is determined 34 and the energy of the signal for two neighbouring frequencies, preferably 10 Hz higher and 10 Hz lower, is determined 35. Then, according to this embodiment of the invention, the energy quotient of the verified frequency fs" and the average energy of two neighbouring frequencies is calculated 36 and compared 37 against the threshold of the trace of removal or modification of the acoustic marker signal. It is assumed that if the value of the calculated quotient is greater than the threshold of the trace of removal or modification of the acoustic marker signal, then for a given frequency fs" the tonal component of the acoustic marker signal S" was present and the counter of such events is increased 38. Once all possible frequencies fs" from the set FS" are checked, the event counter indication is compared 39 with the adopted threshold for the event counter. It is assumed that in the registered voice signal GS, the trace S" of removal or modification of the acoustic marker signal is confirmed 40, if the indication of the event counter is greater than the assumed threshold of the event counter. Otherwise, information is returned that no trace of S" of removal or modification of the acoustic marker signal has been detected 41.

## Claims

1. A Method of verifying the authenticity of a voice sample, in which
an acoustic marker signal (S) is played back (1) in the presence of the user,
a voice signal from the user (G) is recorded (2), marked by an acoustic marker signal (S),
**characterised in that**
an acoustic marker signal from the recorded signal is extracted (4),
a check is performed (5) whether the registered signal features the acoustic marker signal (S) expected for a particular session, and then the acoustic signal is verified by
checking (6) whether an acoustic marker signal (S') unexpected for a given session is present in the registered signal,
checking (7) whether there is a trace of removal or modification of the acoustic marker signal (S") in the registered signal,
an alarm signal is generated (8), if in the signal there is no acoustic marker signal for a particular session (S) or the result of the acoustic marker signal's verification is positive.

2. The method according to claim 1 **characterised in that** the expected acoustic marker signal (S) of a particular session is a unique combination of tonal frequencies assigned based on parameters identifying a given session.

3. The method according to claims 1 or 2 **characterised in that** the verification of the presence of the expected and unexpected acoustic marker signal for a given session is based on band energy measurement.

4. The method according to claims 1 to 3 **characterised in that** the presence of an expected acoustic marker signal is confirmed (15), if for each frequency (fs) from the set of frequencies expected in the signal in a particular session (FS), the quotient of the energy measured for the verified frequency and the average energy measured for two neighbouring frequencies is greater than the threshold of the expected acoustic marker signal.

5. The method according to claims 1 to 5 **characterised in that** the verification of the presence of an expected and unexpected acoustic marker signal for a given session is based on the use of a spectrogram and standard deviation in individual frequency bands.

6. The method according to claims 1 to 6 **characterised in that** the presence of an acoustic marker signal (S) expected in a particular session is confirmed (22), if for each frequency (fs) from the set of frequencies expected in the signal (FS), the standard deviation of the spectrogram line containing the frequency subject to verification is greater than the threshold of the expected acoustic marker signal.

7. The method according to claims 1 to 7 **characterised in that** the presence of an unexpected acoustic signal marker (S') is confirmed (29), if the detected number of frequencies (fs') from the set of frequencies (FS') that are not expected in the signal exceeds the threshold for the unexpected acoustic marker signal.

8. The method according to any of the preceding claims **characterised in that** the verification of the presence of a trace of removal or modification of the acoustic marker signal for a given session is based on band energy measurement.

9. The method according to claims 1 to 9 **characterised in that** the presence of a trace of removal or modification of the acoustic marker signal is confirmed (40), if for a set of frequencies that are not expected in the signal (FS"), the number of detected components of the acoustic marker signal is greater than the threshold of the trace of removal or modification of the acoustic marker signal.
